# EUROPEAN PATENT SPECIFICATION

(11) **EP 2 509 190 B1**
(45) Date of publication and mention of the grant of the patent: **12.11.2014**
(21) Application number: 10833339.4
(22) Date of filing: 26.11.2010
(51) Int. Cl.: H02J 13/00, G06Q 50/00, H02J 3/00

(54) **CONTROL DEVICE, CONTROL SYSTEM, AND CONTROL METHOD**
STEUERVORRICHTUNG, STEUERSYSTEM UND STEUERUNGSVERFAHREN
DISPOSITIF DE COMMANDE, SYSTÈME DE COMMANDE ET PROCÉDÉ DE COMMANDE

(30) Priority: 30.11.2009 JP 2009272984
(43) Date of publication of application: 10.10.2012
(73) Proprietor: Kyocera Corporation, Kyoto-shi Kyoto 612-8501 (JP)
(72) Inventor: KIUCHI, Kazuya, Tokyo 158-8610 (JP); KUSAFUKA, Kaoru, Tokyo 158-8610 (JP); WATANABE, Tadayuki, Tokyo 158-8610 (JP); SHICHIRI, Kazumasa, Tokyo 158-8610 (JP); IWABUCHI, Akinori, Yokohama-shi Kanagawa 224-8502 (JP)
(74) Representative: Schwabe - Sandmair - Marx
(86) International application number: PCT/JP2010/071149
(87) International publication number: WO 2011/065494

(56) References cited:
- JP-A- 2001 184 406
- JP-A- 2002 271 981
- JP-A- 2002 271 981
- JP-A- 2008 021 152
- JP-A- 2008 021 152
- JP-A- 2008 131 841
- JP-A- 2008 202 984

## Description

### TECHNICAL FIELD

The present invention relates to a control device provided in a power consumer including a DC power supply and loads, to control the loads, a control system provided with the control device and a device capable of operating a plurality of loads, and a control method in the control device.

### BACKGROUND ART

In recent years, in view of the reduction of an environment load, in response to the generation of various factors, an electrical device that is a load suppresses its own power consumption. For example, when a temperature detected by a room temperature sensor is low, a refrigerator provided therein with the room temperature sensor suppresses power consumption by reducing the degree of cooling.

Furthermore, there has been provided a system in which a DC power supply such as a photovoltaic cell is provided in a house and the like which are power consumers, electric power required by devices in the house is supplied by power generated by the DC power supply, and surplus power is fed back to an electric power system, resulting in gradual availability of a system for selling it (electric power selling).

### PRIOR ART DOCUMENT

### NON-PATENT DOCUMENT

Non-Patent Document 1: "power saving is automatically customized!? What is Panasonic "ECONAVI" product group?" [online], [search for November 26, 2009] <http:trendy.nikkeibp.co.jp/article/column/20090904/1028637/>

### SUMMARY OF THE INVENTION

However, the above-mentioned conventional technology does not consider an electric power demand of a consumer group and an electric power supply from an electric power system. This led to a problem that even when the electric power supply from the electric power system exceeds the electric power demand of the consumer group, the power is fed back from the consumer to the electric power system, and at the same time, even when the electric power supply from the electric power system is not sufficient for the electric power demand of the consumer group, the power consumption in the consumer may be increased.

Therefore, the present invention has been achieved in view of the above-described problems, and an object thereof is to provide a control device, a control system, and a control method, by which it is possible to perform appropriate load control in consideration of the supply and demand of electric power.

To solve the above problem, the present invention has following features. A first feature of the present invention is summarized as a control device (smart controller 102) provided in a power consumer (smart house 10) having a DC power supply (photovoltaic cell 106) and a load (illumination 110, air conditioner 112, heat storage device 114), and controlling the load comprising: a reception unit (reception processing unit 162) and a load control unit (load control unit 164) as defined in the appended claims.

According to the present invention, it is possible to perform appropriate load control in consideration of the supply and demand of electric power.

### BRIEF DESCRIPTION OF THE DRAWINGS

[Fig. 1] Fig. 1 is a configuration diagram of an electric power system according to an embodiment of the present invention.
[Fig. 2] Fig. 2 is a configuration diagram of a smart controller according to the embodiment of the present invention.
[Fig. 3] Fig. 3 is a diagram illustrating a correspondence relation between operation modes and charge threshold values according to the embodiment of the present invention.
[Fig. 4] Fig. 4 is a diagram illustrating time transition of electricity prices according to the embodiment of the present invention.
[Fig. 5] Fig. 5 is a perspective view illustrating the external appearance of a remote control sensor unit according to the embodiment of the present invention.
[Fig. 6] Fig. 6 is a configuration diagram of a remote control sensor unit according to the embodiment of the present invention.
[Fig. 7] Fig. 7 is a sequence diagram illustrating an operation of an electric power system according to the embodiment of the present invention.

### MODES FOR CARRYING OUT THE INVENTION

Hereinafter, an embodiment of the present invention will be described with reference to the accompanying drawings. Specifically, the embodiment of the present invention will be described in sequence of (1) Configuration of electric power system, (2) Operation of electric power system, (3) Operation and effect, and (4) Other embodiments. In all drawings for explaining the following embodiments, the same or similar reference numerals are used to designate the same or similar elements.

### (1) Configuration of electric power system

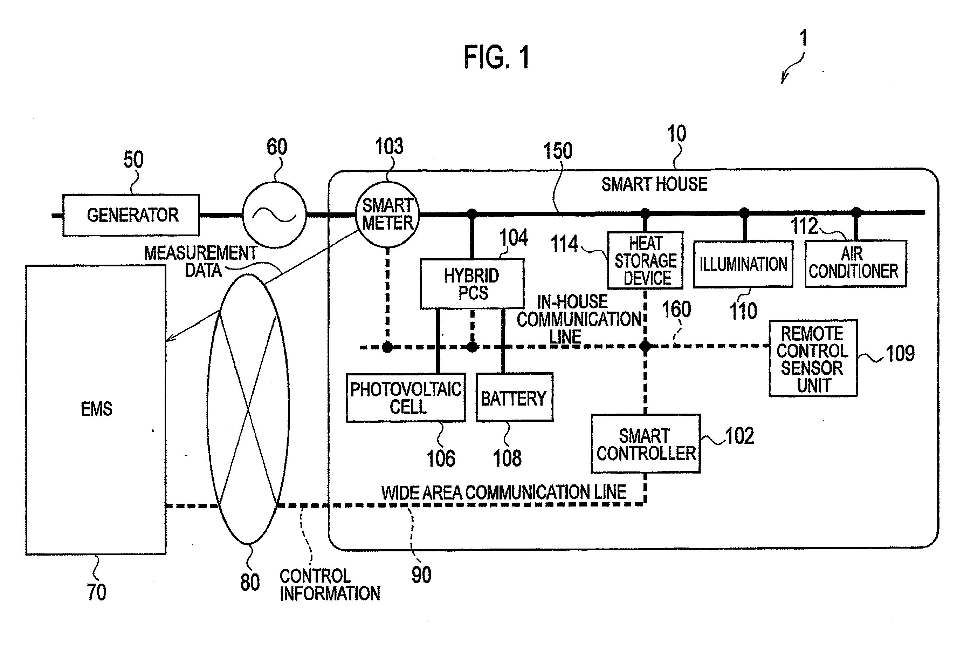

Fig. 1 is a configuration diagram of an electric power system 1 according to the embodiment of the present invention. The electric power system 1 illustrated in Fig. 1 is a system employing so-called a smart grid.

As illustrated in Fig. 1, the electric power system 1 includes a smart house 10 serving as a power consumer, a power generator 50 serving as a power supplier, an energy management system (EMS) 70 for controlling the whole power of the electric power system 1, an electric power system 60 between the smart house 10 and the power generator 50, and the Internet 80 serving as a communication path between the smart house 10 and the EMS 70. In addition, under the control of the electric power system 60, a plurality of smart houses 10 exist, and these smart houses 10 form a power consumer group.

In the electric power system 1, power is transmitted to the smart house 10 from the power generator 50 via the electric power system 60 and is used in the smart house 10. Furthermore, in some cases, power is fed back from the smart house 10 to the electric power system 60.

Furthermore, in the electric power system 1, an amount of power to be used in the smart house 10 is measured and is transmitted to the EMS 70 via the Internet 80 as measurement data.

The EMS 70 decides electricity prices based on the electric power supply from the electric power system 60 and an electric power demand of the consumer group based on the measurement data. Here, as a value (supply-demand gap) obtained by subtracting the amount of power to be used in the consumer group from the amount of power that can be supplied from the electric power system 60 to the consumer group is larger, the EMS 70 reduces an electricity prices. As the supply-demand gap is smaller, the EMS 70 increases the electricity prices. Specifically, it is possible for the EMS 70 to decide two types of electricity prices, that is, TOU (Time of Use) which is an electricity prices determined according to time zones based on a past supply-demand gap, and RTP (Real Time Pricing) which is an electricity prices set based on a real-time supply-demand gap.

Moreover, the EMS 70 transmits control information including charge information indicating the decided electricity prices to the smart house 10 via the Internet 80. Specifically, the EMS 70, for example, in a 24-hour cycle, transmits the TOU a predetermined period before (for example, a day before) a time zone to which the TOU is applied. The EMS 70 transmits the RTP in a cycle (for example, a 10-minute cycle) shorter than the transmission cycle of the TOU.

The smart house 10 includes: a smart controller 102 serving as a control device, a smart meter 103; a hybrid power conditioner (a hybrid PCS) 104; a photovoltaic cell 106 serving as a DC power supply; a battery 108; a remote control sensor unit 109; and an illumination 110, an air conditioner 112, and a heat storage device 114 serving as a load.

The smart controller 102 is connected to the Internet 80 via a wired line or a wide area communication line 90 serving as a radio line. Furthermore, the smart controller 102 is connected to the smart meter 103, the hybrid PCS 104, the remote control sensor unit 109, and the heat storage device 114 via a wired line or an in-house communication line 160 serving as a radio line. The configuration and operation of the smart controller 102 will be described later.

The smart meter 103 is connected to the electric power system 60, and is connected to an in-house distribution line 150. The smart meter 103 detects the amount of power supplied from the electric power system 60 and used for the operation of the illumination 110, the air conditioner 112, and the heat storage device 114 or used for charging the battery 108, and transmits the detected power amount to the EMS 70 via the Internet 80 as measurement data.

The hybrid PCS 104 is connected to the in-house distribution line 150, and is connected to the photovoltaic cell 106 and the battery 108. The hybrid PCS 104 sends DC power generated by the photovoltaic cell 106 to the in-house distribution line 150 or stores the DC power in the battery 108, under the control by the smart controller 102. Furthermore, the hybrid PCS 104 converts DC power due to the discharge of the battery 108 to AC power and sends the AC power to the in-house distribution line 150, under the control by the smart controller 102. The AC power sent to the in-house distribution line 150 is appropriately used in the illumination 110, the air conditioner 112, and the heat storage device 114, or is fed back to the electric power system 60. Furthermore, the hybrid PCS 104 converts AC power from the electric power system 60 to DC power and stores the DC power in the battery 108, under the control by the smart controller 102.

The remote control sensor unit 109 emits infrared rays corresponding to an operation instruction for operating the illumination 110 and the air conditioner 112, under the control by the smart controller 102. In addition, instead of emitting the infrared rays, the remote control sensor unit 109 may also transmit an operation instruction for operating the illumination 110 and the air conditioner 112 through radio communication.

The illumination 110, the air conditioner 112, and the heat storage device 114 are connected to the in-house distribution line 150, and operate by AC power from the in-house distribution line 150. The heat storage device 114, for example, is a heat pump.

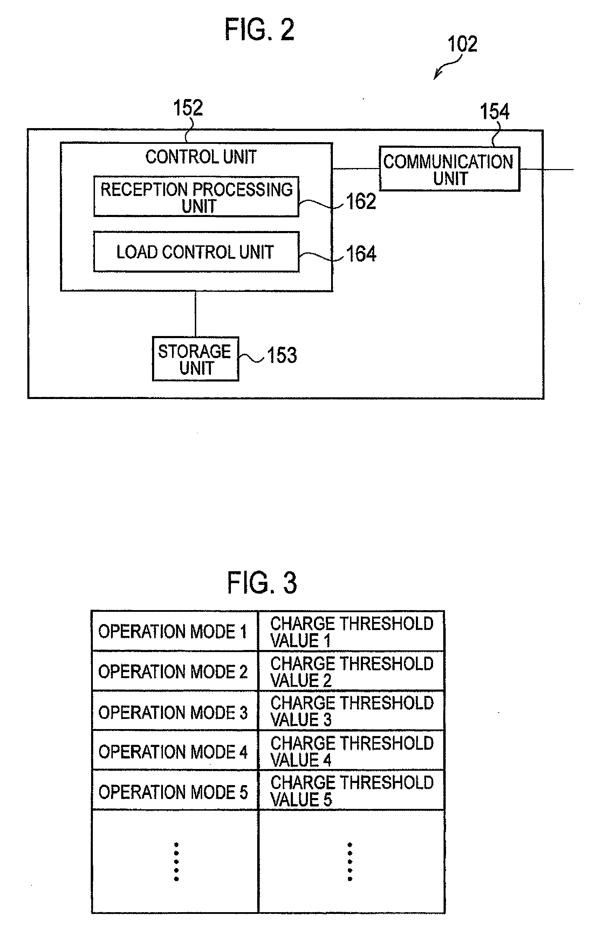

Fig. 2 is a configuration diagram of the smart controller 102. As illustrated in Fig. 2, the smart controller 102 includes a control unit 152, a storage unit 153, and a communication unit 154.

The control unit 152, for example, is a CPU, and controls each element of the smart house 10. The storage unit 153 is configured by using a memory, for example, and stores various types of information used for the control and the like of each element of the smart house 10. The communication unit 154 receives control information from the EMS 70 via the wide area communication line 90 and the Internet 80. Furthermore, the communication unit 154 communicates with the smart meter 103, the hybrid PCS 104, and the remote control sensor unit 109 via the in-house communication line 160.

The control unit 152 includes a reception processing unit 162 and a load control unit 164. The reception processing unit 162 receives the control information received in the communication unit 154. Furthermore, the reception processing unit 162 extracts charge information included in the control information.

The load control unit 164 compares electricity prices indicated by the extracted charge information with a threshold value (a charge threshold value) of a predetermined electricity prices, thereby deciding the operation modes of the illumination 110, the air conditioner 112, and the heat storage device 114, which serve as a load.

As described above, there exist the two types of electricity prices (the TOU and the RTP) indicated by the charge information, and the RTP has a transmission cycle shorter than that of the TOU and corresponds to a real-time supply-demand situation. Therefore, while the RTP is acquired in a predetermined transmission cycle, the load control unit 164 compares the RTP with the charge threshold value to decide the operation mode. While it is not possible to acquire the RTP in a predetermined transmission cycle due to communication failure, the load control unit 164 compares the TOU with the charge threshold value to decide the operation mode. Here, the operation modes are associated with the magnitude of power consumption of loads. That is, a difference exists in power consumption of loads according to set operation modes.

Fig. 3 is a diagram illustrating a correspondence relation between operation modes and charge threshold values. According to the correspondence relation between the operation modes and the charge threshold values, the charge threshold value is lower in an operation mode with smaller power consumption and is higher in an operation mode with larger power consumption. In Fig. 3, as the operation mode has a higher number, corresponding power consumption is smaller, and as the charge threshold value has a higher number, the charge threshold value is higher. The correspondence relation between the operation mode and the charge threshold value is predetermined for each of the illumination 110, the air conditioner 112, and the heat storage device 114, which serve as a load, and is stored in the storage unit 153.

The load control unit 164 reads out the correspondence relation between the operation mode and the charge threshold value for each of the illumination 110, the air conditioner 112, and the heat storage device 114, which serve as a load, from the storage unit 153. Next, among the charge threshold values, the load control unit 164 specifies a charge threshold value which is higher than the electricity prices indicated by the extracted charge information and is the nearest the electricity prices indicated by the extracted charge information.

For example, when the electricity prices indicated by the extracted charge information exists between the charge threshold value 3 and the charge threshold value 4 illustrated in Fig. 3, the load control unit 164 specifies the charge threshold value 4. Moreover, the load control unit 164 specifies an operation mode, which corresponds to the specified charge threshold value, for each of the illumination 110, the air conditioner 112, and the heat storage device 114, which serve as a load. For example, when the charge threshold value 4 has been specified in Fig. 3, the operation mode 4 corresponding to the charge threshold value 4 is specified.

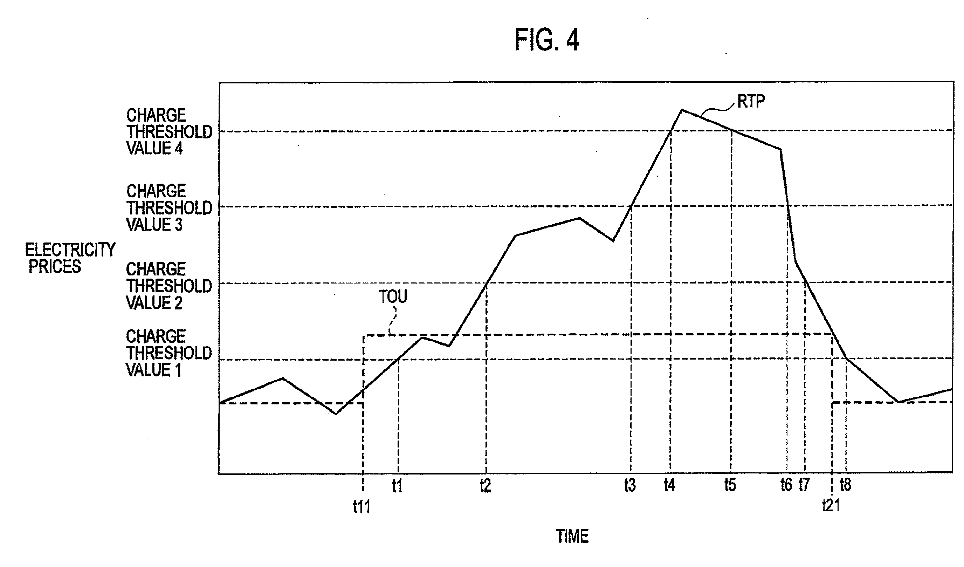

Hereinafter, the process of the load control unit 164 will be described using the case, in which the correspondence relation between the operation modes and the charge threshold values is illustrated in Fig. 3 and time transition of electricity prices is illustrated in Fig. 4, as an example.

While the RTP is acquired in a predetermined cycle, since, initially, the RTP is smaller than the charge threshold value 1, the load control unit 164 decides an operation mode of a load as the operation mode 1. If the RTP is equal to or more than the charge threshold value 1 at time t1, the load control unit 164 switches the operation mode of the load from the operation mode 1 to the operation mode 2. If the RTP is equal to or more than the charge threshold value 2 at time t2, the load control unit 164 switches the operation mode of the load from the operation mode 2 to the operation mode 3. If the RTP is equal to or more than the charge threshold value 3 at time t3, the load control unit 164 switches the operation mode of the load from the operation mode 3 to the operation mode 4. If the RTP is equal to or more than the charge threshold value 4 at time t4, the load control unit 164 switches the operation mode of the load from the operation mode 4 to the operation mode 5.

Then, the RTP is smaller than the charge threshold value 4 at time t5, the load control unit 164 switches the operation mode of the load from the operation mode 5 to the operation mode 4. If the RTP is smaller than the charge threshold value 3 at time t6, the load control unit 164 switches the operation mode of the load from the operation mode 4 to the operation mode 3. If the RTP is smaller than the charge threshold value 2 at time t7, the load control unit 164 switches the operation mode of the load from the operation mode 3 to the operation mode 2. If the RTP is smaller than the charge threshold value 1 at time t8, the load control unit 164 switches the operation mode of the load from the operation mode 2 to the operation mode 1.

Meanwhile, when the RTP is not acquired in a predetermined cycle and the TOU is acquired, since, initially, the TOU is smaller than the charge threshold value 1, the load control unit 164 decides the operation mode of the load as the operation mode 1. If the TOU is equal to or more than the charge threshold value 1 at time t11, the load control unit 164 switches the operation mode of the load from the operation mode 1 to the operation mode 2. Then, if the TOU is smaller than the charge threshold value 1 at time t21, the load control unit 164 switches the operation mode of the load from the operation mode 2 to the operation mode 1.

In addition, the load control unit 164 may also correct the charge threshold value based on the power stored amount in the battery 108. Specifically, the load control unit 164 requests the hybrid PCS 104 for the stored power amount in the battery 108 via the communication unit 154. Upon request of the load control unit 164, the hybrid PCS 104 detects the stored power amount in the battery 108 and outputs the stored power amount to the smart controller 102. The load control unit 164 receives the stored power amount via the communication unit 154. Moreover, when the stored power amount is equal to or more than a first threshold value, the load control unit 164 reduces each charge threshold value in Fig. 3. Meanwhile, when the stored power amount is equal to or less than a second threshold value (here, the first threshold value > the second threshold value), the load control unit 164 increases each charge threshold value in Fig. 3.

Then, similarly to the above, the load control unit 164 compares the electricity prices indicated by the extracted charge information with the corrected charge threshold value, thereby deciding the operation modes of the illumination 110, the air conditioner 112, and the heat storage device 114, which serve as a load.

In this way, whenever the operation mode is decided for each of the illumination 110, the air conditioner 112, and the heat storage device 114, which serve as a load, the load control unit 164 associates the operation mode with identification information for uniquely specifying a corresponding load to generate control instruction information. Moreover, in order to control the illumination 110 and the air conditioner 112, the load control unit 164 transmits the control instruction information to the remote control sensor unit 109 via the communication unit 154 and the in-house communication line 160. Furthermore, in order to control the heat storage device 114, the load control unit 164 transmits the control instruction information to the heat storage device 114.

The remote control sensor unit 109 receives the control instruction information and emits infrared rays corresponding to an operation instruction according to the control instruction information.

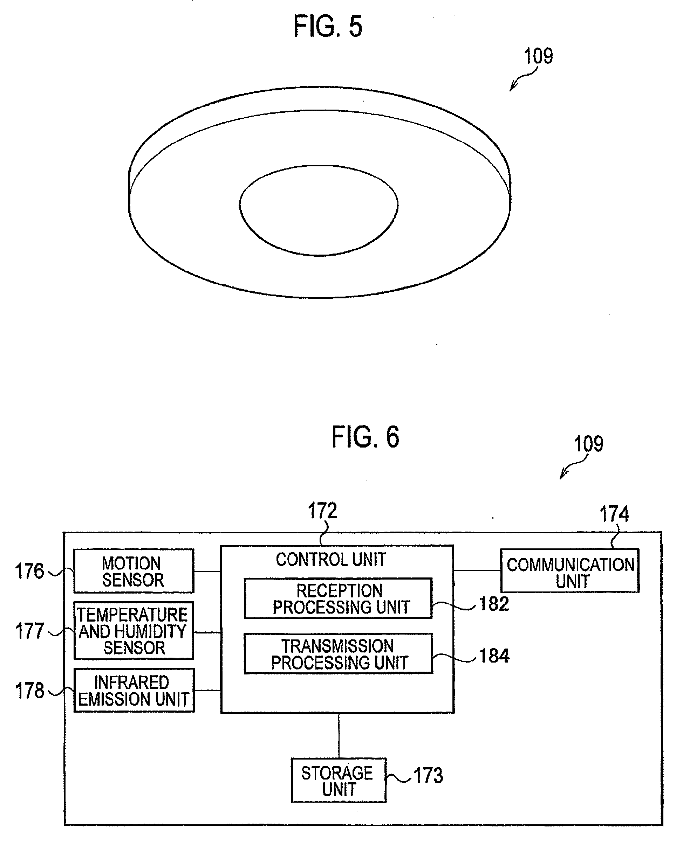

Fig. 5 is a perspective view illustrating the external appearance of the remote control sensor unit 109 and Fig. 6 is a configuration diagram of the remote control sensor unit 109. The remote control sensor unit 109 is installed on the ceiling of a room provided with the illumination 110 and the air conditioner 112, which serve as a load, in the smart house 10.

The remote control sensor unit 109 includes a control unit 172, a storage unit 173, a communication unit 174, a motion sensor 176, a temperature and humidity sensor 177, and an infrared emission unit 178.

The control unit 172, for example, is a CPU, and controls each element of the remote control sensor unit 109. The storage unit 173, for example, is configured by using a memory, and stores various types of information used for the control and the like of each element of the remote control sensor unit 109. The communication unit 174 communicates with the smart controller 102 via the in-house communication line 160, and receives the control instruction information.

The motion sensor 176 detects a human staying in the room provided with the remote control sensor unit 109. The temperature and humidity sensor 177 detects temperature and humidity of the room provided with the remote control sensor unit 109. The infrared emission unit 178 emits infrared rays corresponding to an operation instruction for the illumination 110 and the air conditioner 112, which serve as a load.

The control unit 172 includes a reception processing unit 182 and a transmission processing unit 184. The reception processing unit 182 receives the control instruction information received in the communication unit 174. The transmission processing unit 184 specifies a load to be controlled and an operation mode, which is the content of control, based on the control instruction information. Moreover, the transmission processing unit 184 controls the infrared emission unit 178 to emit infrared rays corresponding to an operation instruction for allowing the load to be controlled to perform an operation corresponding to the operation mode.

The illumination 110 and the air conditioner 112, which serve as a load, include infrared reception units (not illustrated), respectively. The illumination 110 and the air conditioner 112, which serve as a load, operate in an operation mode indicated by the operation instruction corresponding to the infrared rays received in the infrared reception units.

Furthermore, the heat storage device 114 serving as a load operates in an operation mode corresponding to the control instruction information.

### (2) Operation of electric power system

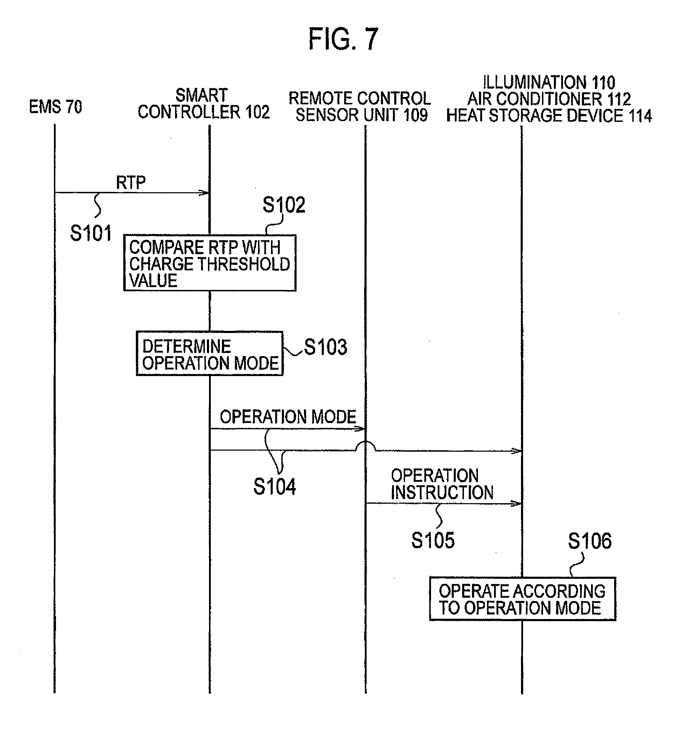

Next, the operation of the electric power system 1 will be described. Fig. 7 is a sequence diagram illustrating the operation of the electric power system 1.

In step S101, the EMS 70 transmits control information including RTP to the smart controller 102 in a predetermined transmission cycle. The smart controller 102 receives the control information including the RTP from the EMS 70.

In step S102, the smart controller 102 compares the RTP with a charge threshold value in the predetermined correspondence relation between operation modes and charge threshold values.

In step S103, the smart controller 102 decides operation modes of the illumination 110, the air conditioner 112, and the heat storage device 114, which serve as a load, based on a comparison result.

In step S104, the smart controller 102 transmits control instruction information including the operation modes, which correspond to the illumination 110 and the air conditioner 112, to the remote control sensor unit 109. The remote control sensor unit 109 receives the control instruction information including the operation modes from the smart controller 102. Furthermore, the smart controller 102 transmits control instruction information including the operation mode, which corresponds to the heat storage device 114, to the heat storage device 114. The heat storage device 114 receives the control instruction information.

In step S105, the remote control sensor unit 109 emits infrared rays corresponding to an operation instruction for performing an operation corresponding to the operation modes in the control instruction information. The illumination 110 and the air conditioner 112, which serve as a load, emit infrared rays corresponding to the operation instruction.

In step S106, the illumination 110 and the air conditioner 112 operate in the operation modes corresponding to the operation instruction. Furthermore, the heat storage device 114 operates in the operation mode corresponding to the control instruction information.

### (3) Operation and effect

In the electric power system 1 according to the embodiment of the present invention, the photovoltaic cell 106 and loads represented by the illumination 110, the air conditioner 112 and the heat storage device 114, are provided in the smart house 10 which is a power consumer, and the smart controller 102 in the smart house 10 controls the loads represented by the illumination 110, the air conditioner 112, and the heat storage device 114. Specifically, the smart controller 102 receives control information from the EMS 70 as charge information indicating the electricity prices set according to the electric power supply from the electric power system 60 and the electric power demand of a consumer group. Moreover, the smart controller 102 compares the electricity prices with the charge threshold value in the predetermined correspondence relation between the operation modes and the charge threshold values, thereby making a decision so that an operation mode in which power consumption is reduced as the electricity prices is higher is the operations modes of the illumination 110, the air conditioner 112, and the heat storage device 114, which serve as a load. Moreover, the smart controller 102 controls the illumination 110, the air conditioner 112, and the heat storage device 114, which serve as a load, in a direct manner or via the remote control sensor unit 109 such that the illumination 110, the air conditioner 112, and the heat storage device 114 operate in the decided operation mode.

As described above, in consideration of the fact that the electricity prices is set according to the electric power supply from the electric power system 60 and the electric power demand of the consumer group, the smart controller 102 decides so that the operation mode in which the power consumption is reduced as the electricity prices is higher is the operation modes of the loads, as a result of which it is possible to perform appropriate load control in consideration of the supply and demand of electric power.

Furthermore, in the present embodiment, the smart controller 102 corrects the charge threshold value according to the stored power amount in the battery 108, and compares the electricity prices with the charge threshold value, thereby deciding an operation mode. Consequently, it is possible to perform appropriate load control in consideration of the stored power amount in the battery 108.

Furthermore, the remote control sensor unit 109 is installed on the ceiling of a room provided with the illumination 110 and the air conditioner 112, which serve as a load, and emits infrared rays corresponding to an operation instruction for operating the illumination 110 and the air conditioner 112, which serve as a load, in the decided operation mode. Consequently, even when the smart controller 102 and the respective loads are not connected to each other through the in-house communication line 160, it is possible for the smart controller 102 to control the respective loads.

### (4) Other embodiments

As described above, the present invention has been described with the embodiments. However, it should not be understood that those descriptions and drawings constituting a part of the present disclosure limit the present invention. From this disclosure, a variety of alternate embodiments, examples, and applicable techniques will become apparent to one skilled in the art.

In the above-mentioned embodiment, the photovoltaic cell 106 is used as a DC power supply. However, even in the case of using other DC power supplies, the invention can be applied in the same manner.

Furthermore, the load control unit 164 may also set priorities to the illumination 110, the air conditioner 112, and the heat storage device 114, which serve as a load, which are objects to be controlled. In this case, when an operation mode with lower power consumption is decided as compared with a present operation mode, the load control unit 164, transmits in order of control instruction information corresponding to loads with increasing priorities to the remote control sensor unit 109. This allows for a situation where the load with a lower priority is transitioned to an operation mode with a lower power consumption, and the load with a higher priority can be operated without reducing the power consumption as much as possible.

Thus, it must be understood that the present invention includes various embodiments that are not described herein. Therefore, the present invention is limited only by the specific features of the invention in the scope of the claims reasonably evident from the disclosure above.

### INDUSTRIAL APPLICABILITY

The control device, the control system, and the control method of the present invention enable appropriate load control in consideration of the supply and demand of electric power, and are available for a control device and the like.

## Claims

1. A control device (102) provided in a power consumer (10) having a DC power supply (106) and a load (110, 112, 114), and controlling the load comprising:
a reception unit (162) configured to receive charge information including a first charge information indicating predetermined electricity prices in a first cycle and a second charge information indicating electricity prices set according to a real-time supply-demand gap of electric power received in a second cycle which is shorter than the first cycle; and
a load control unit (164) configured to control a degree of power consumption of the load (110, 112, 114) of the consumer (10) based on the second charge information when the charge information is received in the second cycle in the reception unit (162) and based on the first charge information when the charge information is not received in the second cycle in the reception unit (162).

2. The control device (102) according to claim 1, wherein the load control unit (164) strengthens restriction of the power consumption as the electricity prices indicated by the charge information is higher, and loosens the restriction of the power consumption as the electricity prices indicated by the charge information is lower.

3. The control device (102) according to claim 1, wherein, if the power consumer (10) comprises a storage (108) configured to store energy,
the load control unit (164) controls the degree of the power consumption based on an amount of the energy stored in the storage (108).

4. The control device (102) according to claim 1, wherein
operation modes related to the load (110, 112, 114) are associated with threshold values of the electricity prices, and
the load control unit (164) selects the operation mode based on the electricity prices indicated by the charge information and the threshold values of the electricity prices.

5. The control device (102) according to claim 4, wherein the operation modes are associated with the threshold values of the electricity prices for respective load (110, 112, 114).

6. The control device (102) according to claim 1, wherein the load control unit (164) transmits an instruction to the load (110, 112, 114) via a device (109) capable of operating the plurality of loads, wherein the instruction is related to control of the degree of the power consumption of the load.

7. A control system including a control device (103) as claimed in any one of claims 1 to 6, and
a transmission unit (109) configured to transmit an operation instruction to the load (110, 112, 114), the operation instruction corresponding to the control of the degree of the power consumption of the load.

8. A control method used in a control device (102) provided in a power consumer (10) having a DC power supply (106) and a load (110, 112, 114), and controlling the load, comprising:
a step of receiving, by the control device (102) reception unit (162) including a first charge information indicating predetermined electricity prices in a first cycle and a second charge information indicating electricity prices set according to a real-time supply-demand gap of electric power received in a second cycle which is shorter than the first cycle, charge information ; and
a step of controlling, by the control device (102), a degree of power consumption of the load of the consumer based on the second charge information when the charge information is received in the second cycle in the reception unit and based on the first change information when the charge information is not received in the second cycle in the reception unit.

## Patentansprüche

1. Steuervorrichtung (102), die in einem Leistungsverbraucher (10) mit einer Gleichstrom-Leistungsversorgung (106) und einer Last (110, 112, 114) vorgesehen ist und die die Last steuert und die Folgendes umfasst:
eine Empfangseinheit (162), die konfiguriert ist, Gebühreninformationen zu empfangen, die erste Gebühreninformationen, die vorgegebene Elektrizitätspreise in einem ersten Zyklus angeben, und zweite Gebühreninformationen, die Elektrizitätspreise angeben, die in Übereinstimmung mit einer Echtzeit-Versorgungsanforderungslücke elektrischer Leistung festgelegt werden, die in einem zweiten Zyklus, der kürzer ist als der erste Zyklus, werden, empfangen werden, enthalten; und
eine Laststeuereinheit (164), die konfiguriert ist, den Betrag des Leistungsverbrauchs der Last (110, 112, 114) des Verbrauchers (10) anhand der zweiten Gebühreninformationen, wenn die Gebühreninformationen in dem zweiten Zyklus in der Empfangseinheit (162) empfangen werden, und anhand der ersten Gebühreninformationen, wenn die Gebühreninformationen in dem zweiten Zyklus in der Empfangseinheit (162) nicht empfangen werden, zu steuern.

2. Steuervorrichtung (102) nach Anspruch 1, wobei die Laststeuereinheit (164) Beschränkungen des Leistungsverbrauchs verstärkt, wenn die Elektrizitätspreise, die durch die Gebühreninformationen angegeben werden, höher sind, und die Beschränkungen des Leistungsverbrauchs lockert, wenn die Elektrizitätspreise, die durch die Gebühreninformationen angegeben werden, geringer sind.

3. Steuervorrichtung (102) nach Anspruch 1, wobei dann, wenn der Leistungsverbraucher (10) einen Speicher (108) enthält, der konfiguriert ist, Energie zu speichern,
die Laststeuereinheit (164) den Betrag des Leistungsverbrauchs anhand der in dem Speicher (108) gespeicherten Energiemenge steuert.

4. Steuervorrichtung (102) nach Anspruch 1, wobei
Betriebsarten, die mit der Last (110, 112, 114) in Beziehung stehen, Schwellenwerte der Elektrizitätspreise zugeordnet sind und
die Laststeuereinheit (164) die Betriebsart anhand der Elektrizitätspreise, die durch die Gebühreninformationen angegeben werden, und der Schwellenwerte der Elektrizitätspreise auswählt.

5. Steuervorrichtung (102) nach Anspruch 4, wobei den Betriebsarten Schwellenwerte der Elektrizitätspreise für eine jeweilige Last (110, 112, 114) zugeordnet sind.

6. Steuervorrichtung (102) nach Anspruch 1, wobei die Laststeuereinheit (164) einen Befehl zu der Last (110, 112, 114) über eine Vorrichtung (109) sendet, die die mehreren Lasten betreiben kann, wobei der Befehl mit der Steuerung des Betrages des Leistungsverbrauchs der Last in Beziehung steht.

7. Steuersystem, das eine Steuervorrichtung (103) nach einem der Ansprüche 1 bis 6 und eine Sendeeinheit (109), die konfiguriert ist, einen Betriebsbefehl zu der Last (110, 112, 114) zu senden, umfasst, wobei der Betriebsbefehl der Steuerung des Betrages des Leistungsverbrauchs der Last entspricht.

8. Steuerverfahren, das in einer Steuervorrichtung (102) verwendet wird, die in einem Leistungsverbraucher (10) mit einer Gleichstrom-Leistungsversorgung (106) und einer Last (110, 112, 114) vorgesehen ist und die die Last steuert, das umfasst:
einen Schritt des Empfangens durch eine Empfangseinheit (162) der Steuervorrichtung (102) von Gebühreninformationen, die erste Gebühreninformationen, die vorgegebene Elektrizitätspreise in einem ersten Zyklus angeben, und zweite Gebühreninformationen, die Elektrizitätspreise angeben, die in Übereinstimmung mit einer Echtzeit-Versorgungsanforderungslücke elektrischer Leistung festgelegt werden, die in einem zweiten Zyklus, der kürzer ist als der erste Zyklus, empfangen wird, enthalten; und
einen Schritt des Steuerns durch die Steuervorrichtung (102) eines Betrages des Leistungsverbrauchs der Last des Verbrauchers anhand der zweiten Gebühreninformationen, wenn die Gebühreninformationen in dem zweiten Zyklus in der Empfangseinheit empfangen werden, und anhand der ersten Gebühreninformationen, wenn die Gebühreninformationen in dem zweiten Zyklus in der Empfangseinheit nicht empfangen werden.

## Revendications

1. Dispositif de contrôle (102) prévu dans un consommateur de courant (10), comprenant une alimentation en courant continu (106) et une charge (110, 112, 114), et contrôlant la charge, comportant :
une unité de réception (162) configurée de manière à recevoir une information de charge comportant une première information de charge indiquant des prix d'électricité prédéterminés dans un premier cycle et une deuxième information de charge indiquant des prix d'électricité définis en fonction d'un écart en temps réel entre l'offre et la demande en puissance électrique, reçue dans un deuxième cycle plus court que le premier cycle ; et
une unité de contrôle de charge (164) configurée de manière à contrôler un degré de consommation d'énergie de la charge (110, 112, 114) du consommateur (10) en fonction de la deuxième information de charge lorsque l'information de charge est reçue par l'unité de réception (162) lors du deuxième cycle et en fonction de la première information de charge lorsque l'information de charge n'est pas reçue par l'unité de réception (162) lors du deuxième cycle.

2. Dispositif de contrôle (102) selon la revendication 1, où l'unité de contrôle de charge (164) renforce la limitation de la consommation d'énergie à mesure que les prix de l'électricité indiqués par l'information de charge augmente et assouplit la limitation de la consommation d'énergie à mesure que les prix de l'électricité indiqués par l'information de charge diminue.

3. Dispositif de contrôle (102) selon la revendication 1, où, si le consommateur de courant (10) comporte un système stockage (108) configuré de manière à stocker de l'énergie,
l'unité de contrôle de puissance (164) contrôle le degré de consommation d'énergie en fonction d'une quantité d'énergie stockée dans le système de stockage (108).

4. Dispositif de contrôle (102) selon la revendication 1, où
des modes d'opération de la charge (110, 112, 114) sont associés à des valeurs limites des prix de l'électricité, et
l'unité de contrôle de charge (164) sélectionne le mode d'opération en fonction des prix d'électricité indiqués par l'information de charge et des valeurs limites des prix de l'électricité.

5. Dispositif de contrôle (102) selon la revendication 4, où les modes d'opération sont associés aux valeurs limites des prix de l'électricité pour chaque charge (110, 112, 114) respective.

6. Dispositif de contrôle (102) selon la revendication 1, où l'unité de contrôle de la charge (164) transmet une instruction à la charge (110, 112, 114) via un dispositif (109) capable de faire fonctionner la pluralité de charges, où l'instruction concerne le contrôle du degré de consommation d'énergie par la charge.

7. Système de contrôle comportant un dispositif de contrôle (103) selon l'une quelconque des revendications 1 à 6,
et
une unité de transmission (109) configurée de manière à transmettre une instruction de fonctionnement à la charge (110, 112, 114), l'instruction de fonctionnement correspondant au contrôle du degré de consommation d'énergie par la charge.

8. Procédé de contrôle utilisé dans un dispositif de contrôle (102) prévu dans un consommateur de courant (10) comprenant une alimentation en courant continu (106) et une charge (110, 112, 114) et contrôlant la charge, comportant :
une étape de réception par l'unité de réception (162) du dispositif de contrôle (102) d'une information de charge comportant une première information de charge indiquant des prix d'électricité prédéterminés dans un premier cycle et une deuxième information de charge indiquant des prix d'électricité définis en fonction d'un écart en temps réel entre l'offre et la demande en puissance électrique, reçue dans un deuxième cycle plus court que le premier cycle ; et
une étape de contrôle par le dispositif de contrôle (102) d'un degré de consommation d'énergie de la charge du consommateur en fonction de la deuxième information de charge lorsque l'information de charge est reçue par l'unité de réception lors du deuxième cycle et en fonction de la première information de charge lorsque l'information de charge n'est pas reçue par l'unité de réception lors du deuxième cycle.
